# EUROPEAN PATENT APPLICATION

(11) **EP 2 889 213 A1**
(43) Date of publication of application: **01.07.2015**
(21) Application number: 13382576.0
(22) Date of filing: 30.12.2013
(51) Int. Cl.: B64C 1/14, B64C 39/12, B64C 1/00

(54) **Canard aircraft with rear loading**

(71) Applicant: Airbus Operations S.L., 28906 Madrid (ES)
(72) Inventor: Llamas Sandín, Raul, 28906 Getafe (ES)
(74) Representative: Elzaburu S.L.P.

(57) **Abstract**

The invention provides an aircraft for transporting passengers and cargo able to efficiently handle ground operations for loading/unloading cargo and embarking/disembarking passengers at the same time. The lifting structure of the aircraft is formed by a back-swept wing and a fore-plane, the back-swept wing including winglets having a length L allowing them to act as vertical stabilizers. The propulsion system is mounted aft of the centre of gravity of the aircraft and the tailcone of the fuselage is configured to act as a rear access door and as a pressure barrier.

## Description

### FIELD OF THE INVENTION

This invention relates to commercial aircraft and more particularly to aircraft configured for efficiently performing cargo loading/unloading and/or passenger embarking/disembarking operations.

### BACKGROUND OF THE INVENTION

The time an aircraft spends on the ground does not generate revenue for the aircraft operator. The cargo loading/unloading operations, in particular, are currently performed generally through doors located on the sides of the fuselage and the cargo is then moved inside the cargo compartment along the length of the fuselage.

A convenient means to improve the productivity of the ground handling operations for cargo is to have doors at the nose or at the rear of the aircraft fuselage so that the cargo is transferred directly in a straight line into the cargo compartment.

There are several aircraft exhibiting a cargo door at the nose of the fuselage such as, for example, the Airbus A300ST Beluga. While this nose cargo door is convenient from a fuselage volume utilization point of view, as the cargo enters almost directly into the cylindrical portion of the fuselage, it is generally not compatible with ground operations when the aircraft also carries passengers. In particular, the ground handling equipment would interfere with the passenger boarding bridge.

An alternative solution to the "axial" loading of the fuselage is to have a rear cargo door or ramp, as seen in many existing aircraft like, for example, the Airbus A400M.

While this configuration would be compatible with ground operations in a passenger aircraft serviced by a passenger boarding bridge, the geometric constraints imposed on the aft fuselage by the need to respect a tail-strike angle during takeoff makes this configuration inherently volume inefficient as a large volume in the aft fuselage cannot be used for payload. Additionally, in order to provide a straight access to the cargo bay with the full cross section, the aft fuselage needs to be "raised" with respect to the cylindrical portions of the fuselage which results in increased drag, known as upsweep-drag.

### SUMMARY OF THE INVENTION

It is an object of the present invention to provide an aircraft for transporting passengers and cargo able to efficiently handle ground operations for loading/unloading cargo and embarking/disembarking passengers at the same time.

This and other objects are met by an aircraft with the following basic features: the lifting structure is formed by a back-swept wing and a fore-plane, the back-swept wing including winglets having a length L allowing them to act as vertical stabilizers; the propulsion system is mounted aft of the centre of gravity of the aircraft and the tailcone of the fuselage is configured to act as a rear access door and as a pressure barrier.

Advantageously, the aircraft has a double-deck configuration with a cargo compartment in the lower deck adjacent to the tailcone and one or more passenger compartments in the rest of the inner space of the fuselage intended for the payload. The floor of the lower deck is located at a height from the ground that allows carrying out passenger embarking/disembarking operations autonomously without using any specific airport ground equipment. The lifting structure is disposed in the aircraft in a manner that none of its components crosses the upper and lower decks.

Other characteristics and advantages of the present invention will be clear from the following detailed description of embodiments illustrative of its object in relation to the attached figures.

### BRIEF DESCRIPTION OF THE DRAWINGS

FIG. 1 is a schematic sectional view of the Airbus A400M.
FIG. 2a is a schematic view of an aircraft of classical configuration with a typical tail-strike angle and aft fuselage upsweep.
FIGS. 2b and 2c are schematic views of an aircraft of classical configuration with the main landing gear moved aftwards with respect to that in Fig 2a enabling the required tail-strike angle with less upsweep in the aft fuselage.
FIG. 2d is a schematic view of an aircraft of classical configuration with the main landing gear moved aftwards with respect to that in Fig. 2a enabling the required tail-strike angle with less upsweep in the aft fuselage and with the main landing gear and the wing moved aftwards with respect to those in Figs. 2b and 2c as required by stability and control considerations.
FIG. 2e is a schematic view of an aircraft of classical configuration with the main landing gear moved aftwards with respect to that in Fig. 2a enabling the required tail-strike angle with less upsweep in the aft fuselage, with the main landing gear and the wing moved aftwards with respect to those in Figs. 2b and 2c and with a fore-plane or canard as required by stability and control considerations.
FIG. 3 is a schematic sectional view of an aircraft illustrating basic features of the invention.
FIG. 4 is a schematic perspective view of an aircraft illustrating an embodiment of the invention and FIG. 5 is a schematic perspective view of its rear part illustrating a cargo loading operation.
FIG. 6 is a schematic perspective view of an aircraft illustrating another embodiment of the invention.

### DETAILED DESCRIPTION OF THE INVENTION

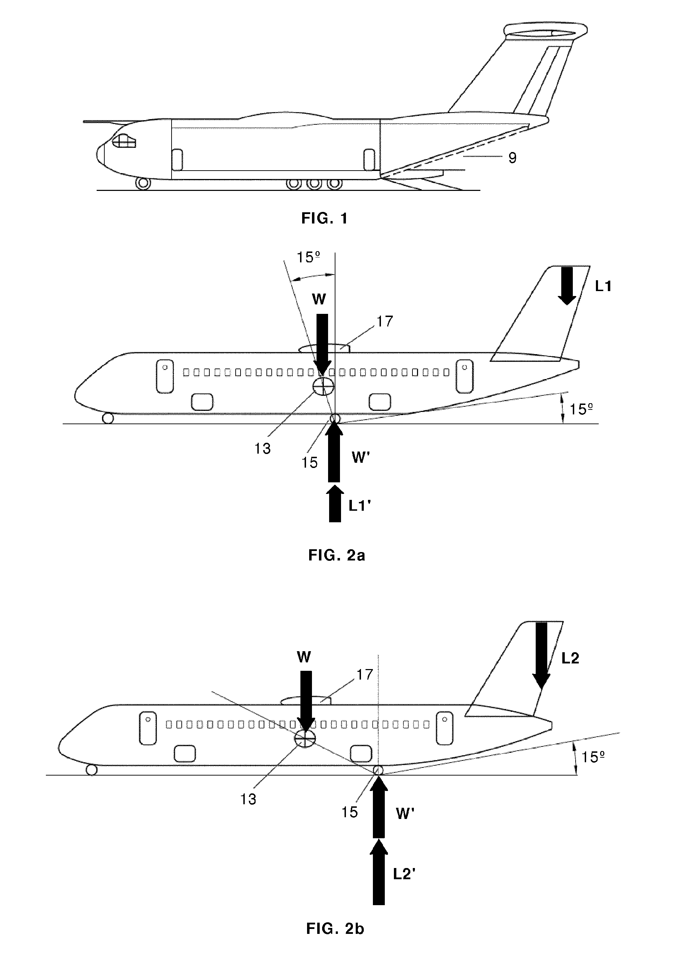

In the Airbus A400M (see Fig. 1) and similar aircraft with a rear door 9 the key driver for the upsweep of the aft fuselage is the requirement to avoid tail strike during rotation at take-off.

To takeoff, the aircraft (see Fig. 2a), moving with sufficient speed on the ground, needs to increase its angle of attack in order to generate sufficient lift to overcome the weight W. The angle of attack is increased by rotating around the main landing gear 15 and the pitching moment required for this rotation is provided by the down-lift L1 generated by the horizontal tail plane. The rotation is initiated when the nose-up pitching moment generated by the horizontal tail plane overcomes the nose-down moment created by the forward offset of the aircraft centre of gravity 13 with respect to the main landing gear 15. Figure 2a also shows the ground reaction forces W' and L1' to the weight W and the down-lift L1 on the main landing gear 15.

It is clear that the greater the horizontal distance between the centre of gravity 13 and the main landing gear 15, the larger the down-lift L1 on the horizontal tail plane must be. Said down-lift L1, in turn, must be compensated by an additional lift on the wing 17. Therefore, it is common practice to locate the main landing gear 15 aftwards with respect to the centre of gravity of the aircraft along an axis rotated 15º with respect to a vertical axis drawn at said centre of gravity 13 so that, when an aircraft attitude of about 15º is achieved during rotation, the centre of gravity 13 is on the vertical of the main landing gear 15 and the horizontal tail plane down-lift L1 can be minimized, as there is no pitch-down moment created by the weight W of the aircraft.

As it has been discussed, the fuselage attitude required for takeoff is approximately of 15º and this determines geometrically the shape of the rear fuselage in terms of upsweep.

It could be conceived, as shown in Figure 2b, to reduce the need for an upswept aft fuselage by locating the main landing gear 15 in a much more aft position. In this case, the nose-down pitching moment created by the weight W of the aircraft would need to be balanced by a much larger down-lift L2 on the horizontal tail plane, which, in turn, would require much more additional lift on the wing 17. This configuration, although feasible, would not be efficient.

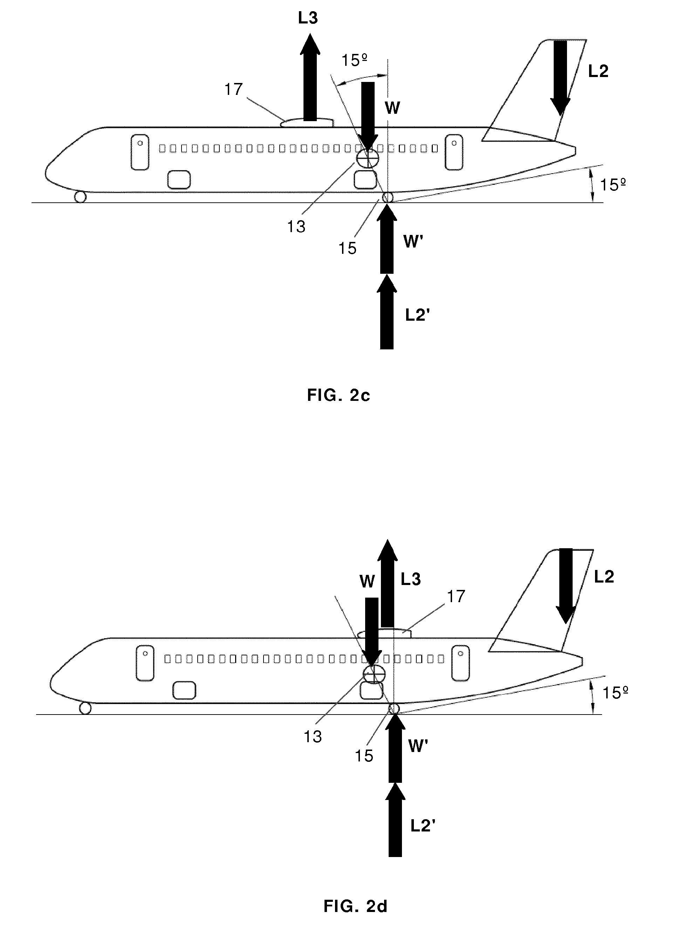

Another alternative, as shown in Figure 2c, would be to displace the centre of gravity 13 of the aircraft to the same relative position with the main landing gear 15 as in Fig. 2a but in this case the wing lift L3 would be much forward of the centre of gravity 13 which would make the aircraft statically unstable.

The static stability would be recovered by shifting the wing aft as shown in Figure 2d and this solution might be feasible but, due to the short lever arm between the wing 17 and the tails centre of lift, it is well known that the size of the tails would have to be increased significantly to provide sufficient stability and control.

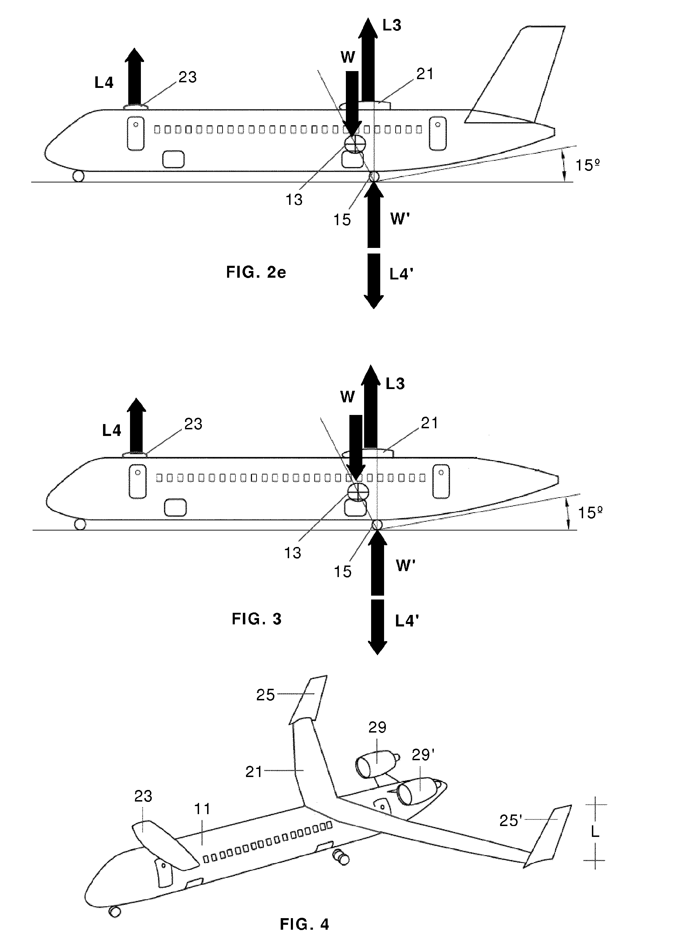

In an alternative configuration shown in Figure 2e, known as "canard", the horizontal stabilizer 23 can be located on the forward part of the fuselage. In this case, the rotation at take-off is produced by the pitch-up moment generated by the up-lift L4 of the horizontal stabilizer 23 and its lever arm length is comparable to that in a conventional configuration. The vertical tail plane remains at the end of the fuselage which is acceptable for stability and control but would compromise the installation of a suitable door on the aft fuselage.

The configuration of the aircraft of the invention (see Fig 3) combines a horizontal stabilizer or fore-plane 23 (whether a high fore-plane or a low fore-plane) located in the forward part of the fuselage 11 and a back-swept wing 21 (whether a low wing or a high wing) with winglets 25, 25' of a suitable length L for providing sufficient yawing moment with respect to the centre of gravity 13 of the aircraft. This wing configuration provides the function of a vertical tail plane. Consequently, the tailcone 31 of the fuselage 11 has the optimum aerodynamic shape as it is not compromised by the tail-strike angle due to the aft location of the main landing gear 15 and no stabilizing surfaces are attached to it. Free of geometrical constraints, the tailcone 31 can be configured as a rear door, allowing axial and unobstructed loading of cargo containers into the cargo compartment of the aircraft, and as a pressure barrier when closed.

In order for the aircraft to be well balanced, thus requiring a relatively small fore-plane 23, the centre of gravity 13 should be slightly ahead of the wing aerodynamic centre. Given the relative position of the wing 21 in the fuselage 11 it is clear that achieving the required mass distribution requires the location of heavy items towards the rear of the aircraft so as to balance the forward portion of the fuselage and the fore-plane 23. A convenient solution is to locate the engines 29, 29' (whether turboprop or turbofan engines) as far aft as possible, as shown in Figure 4. Various embodiments of engines can be envisaged such as engines mounted on the fuselage, engines mounted on the wing or even engines located above the fuselage driving a single pusher propeller or even a puller-pusher propulsive system.

With the aircraft elements located so as to provide the lift, stability and control, payload and propulsion functions in a feasible arrangement, the ground operations can now be improved by providing a convenient means to load the aircraft through the rear fuselage by using the tailcone 31 as a rear door providing direct access to the fuselage as shown in Figure 4 for cargo loading/unloading. The tailcone structure serves then as pressure barrier and gives direct access to a cargo compartment.

In other embodiments the tailcone 31 can also be used as a rear door for passenger embarking/disembarking with a suitable configuration that includes an airstair.

The invention is applicable to various internal arrangements of aircraft, in particular to single-decker and double-decker aircraft.

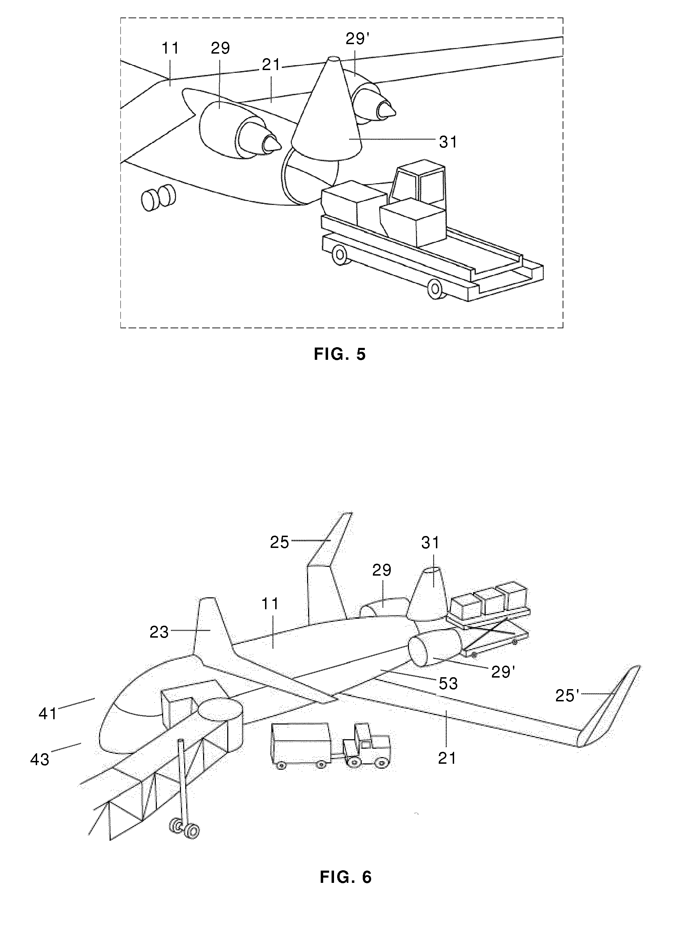

Figures 4 and 5 show an embodiment of a single-decker aircraft with a high back-swept wing 21 with winglets 25, 25' of length L, a high fore-plane 23 and turbofan engines 29, 29'.

The tailcone 31 is configured as rear access door to facilitate cargo loading/unloading operations.

Figure 6 shows an embodiment of a double-decker aircraft with a low back-swept wing 21 with winglets 25, 25' of length L, a high fore-plane 23 and turbofan engines 29, 29'. The upper deck 41 is dedicated to carry passengers and the lower deck 43 is dedicated to carry either passengers or cargo or any combination thereof, being performed the cargo loading/unloading operations on the cargo compartment 53 of the lower deck 43 through the tailcone/rear door 31.

The cargo compartment 53 can be separated from the passenger compartment of the lower deck 43 by a movable partition wall to provide flexibility to the distribution of space between passengers and cargo.

The basic features of the interior configuration of the double-deck aircraft of Figure 6 are that:
- the floors of upper and lower decks 41, 43 are flat surfaces that extend continuously in at least the inner space of the fuselage 11 intended for the payload;
- the floor of the lower deck 43 is located at a height close enough to the ground so that, at least in part, the passenger embarking/disembarking can take place autonomously without any specific airport ground equipment, for instance by using airstairs incorporated in doors that can rotate up and downwards.

Another relevant feature of the double-deck aircraft shown in Figure 6 is that the bottom part of the fuselage 11 is very close to the ground and its rear part has a proper inclination angle to avoid a tail-strike during the takeoff or landing. The shorter length of the double deck fuselage compared to a single deck aircraft of the same passenger capacity facilitates having the bottom part of the fuselage 11 very close to the ground. The short length of the fuselage also allows obtaining a good rotation angle at take-off or landing in spite of the small distance between the bottom part of the fuselage and the ground.

As in known configurations of double-deck aircrafts, the fuselage 11 may be of ovoid or of double-bubble type cross section.

Another relevant feature of the aircraft shown in Figure 6 is that its lifting structure, formed by a low back-swept wing 21 (its central box being located under the floor of the lower deck 43) and a high fore-plane 23, is arranged so that none of its components crosses the upper and lower decks 41, 43.

The passenger embarking/disembarking operations will be done through lateral upper doors (via jetways or boarding stairs) and through lateral lower doors (via jetways or airstairs integrated in the doors). The cargo loading/unloading operations will be done through the tailcone/rear door 31.

Although the present invention has been described in connection with various embodiments, it will be appreciated from the specification that various combinations of elements, variations or improvements therein may be made, and are within the scope of the invention.

## Claims

1. An aircraft comprising a fuselage (11), a lifting structure, landing gears and a propulsion system, **characterized in that**:
- the lifting structure is formed by a back-swept wing (21) and a fore-plane (23), the back-swept wing (21) including winglets (25, 25') having a length L allowing them to act as vertical stabilizers;
- the propulsion system is mounted aft of the centre of gravity (13) of the aircraft;
- the tailcone (31) of the fuselage (11) is configured to act as a rear access door and as a pressure barrier.

2. An aircraft according to claims 1, wherein:
- the aircraft comprises upper and lower decks (41, 43) disposed inside the fuselage (11);
- the upper and lower floors of the upper and lower decks (41, 43) are planar surfaces extending continuously inside the fuselage (11) in at least the inner space of the fuselage (11) intended for the payload;
- the aircraft comprises a cargo compartment (53) in the lower deck (43) contiguous to the tailcone (31) and one or more passenger compartments in the rest of the inner space of the fuselage (11) intended for the payload;
- the floor of the lower deck (43) is located at a height from the ground that allows carrying out passenger embarking/disembarking autonomously without using any specific airport ground equipment;
- the lifting structure is disposed in the aircraft in a manner that none of its components crosses the upper and lower decks (41, 43).

3. An aircraft according to claim 2, wherein the back-swept wing (21) is mounted under the lower deck (43) and the fore-plane (23) is mounted above the upper deck (41).

4. An aircraft according to any of claims 2-3, wherein the cargo compartment (53) is separated from the contiguous passenger compartment by a movable partition wall.

5. An aircraft according to any of claims 2-4, wherein the propulsion system comprises two engines (29, 29') attached to each side of fuselage (11) by means of pylons.

6. An aircraft according to any of claims 2-5, wherein the fuselage (11) has at least two lower lateral access doors to the passenger compartment of the lower deck (43) and at least two upper lateral access doors to the upper deck (41).

7. An aircraft according to claim 6, wherein the lower lateral doors are rotating doors including built-in stairs so that they can be used for embarking/disembarking passengers directly from/to the ground.
